# EUROPEAN PATENT APPLICATION

(11) **EP 2 716 405 A2**
(43) Date of publication of application: **09.04.2014**
(21) Application number: 13177855.7
(22) Date of filing: 24.07.2013
(51) Int. Cl.: B23P 15/00, F01D 5/02, F01D 5/34

(54) **An extruded rotor, a steam turbine having an extruded rotor and a method for producing an extruded rotor**

(30) Priority: 02.10.2012 US 201213633340
(71) Applicant: GENERAL ELECTRIC COMPANY, Schenectady, NY 12345 (US)
(72) Inventor: Farineau, Thomas Joseph, Schenectady, NY New York 12345 (US); Saha, Deepak, Schenectady, NY New York 12345 (US)
(74) Representative: Cleary, Fidelma

(57) **Abstract**

A steam turbine, a rotor and a method for making an extruded rotor (300) are disclosed as having a rotor bore (200) formed of an extruded high temperature alloy. The method includes providing a high temperature alloy, melting the high temperature alloy, extruding the high temperature alloy to form a bore (200), and forming the bore (200) into a rotor (300).

## Description

### FIELD OF THE INVENTION

The present invention is generally directed to steam turbines, and more specifically directed to a steam turbine having an extruded nickel-based superalloy rotor shaft for exposure to steam.

### BACKGROUND OF THE INVENTION

A typical steam turbine plant may be equipped with a high pressure steam turbine, an intermediate pressure steam turbine and a low pressure steam turbine. Each steam turbine is formed of materials appropriate to withstand operating conditions, pressure, temperature, flow rate, etc., for that particular turbine.

Recently, steam turbine plant designs directed toward a larger capacity and a higher efficiency have been designed that include steam turbines that operate over a range of pressures and temperatures. The designs have included high-low pressure integrated, high-intermediate-low pressure integrated, and intermediate-low pressure integrated steam turbine rotors integrated into one piece and using the same metal material for each steam turbine. Often, a metal is used that is capable of performing in the highest of operating conditions for that turbine, thereby increasing the overall cost of the turbine.

A steam turbine conventionally includes a rotor and a casing jacket. The rotor includes a rotatably mounted turbine shaft that includes blades. When heated and pressurized steam flows through the flow space between the casing jacket and the rotor, the turbine shaft is set in rotation as energy is transferred from the steam to the rotor. The rotor, and in particular the rotor shaft, often forms of the bulk of the metal of the turbine. Thus, the metal that forms the rotor significantly contributes to the cost of the turbine. If the rotor is formed of a high cost, high temperature metal, the cost is even further increased. Conventional manufacturing techniques for components of high temperature alloy, such as turbine rotors, involve casting large single-piece components and result in expensive components, extended manufacturing time and such manufacturing capacity is often limited. Further, the size of the rotor is limited by known manufacturing techniques, where single-piece castings have a limited size.

Accordingly, it would be desirable to provide an extruded steam turbine rotor having large sized single-piece rotor that do not suffer from the drawbacks known in the art.

### SUMMARY OF THE INVENTION

According to one aspect of the present invention, a rotor is provided having a rotor bore formed of an extruded high temperature alloy.

According to another aspect of the present invention, a steam turbine is provided having a rotor that includes a rotor bore formed of an extruded high temperature alloy.

According to yet another aspect of the present invention, a method for making an extruded rotor is provided. The method includes providing a high temperature alloy, melting the high temperature alloy, extruding the high temperature alloy to form a rotor bore, and forming the rotor bore into a rotor.

Other features and advantages of the present invention will be apparent from the following more detailed description of the preferred embodiment, taken in conjunction with the accompanying drawings which illustrate, by way of example, the principles of the invention.

### BRIEF DESCRIPTION OF THE DRAWINGS

FIG. 1 is a perspective view of an extruded bore according to an exemplary embodiment of the present disclosure.
FIG. 2 is a perspective view of a turbine rotor according to an exemplary embodiment of the present disclosure.
FIG. 3 is a perspective view of a turbine rotor according to an exemplary embodiment of the present disclosure.

Wherever possible, the same reference numbers will be used throughout the drawings to represent the same parts.

### DETAILED DESCRIPTION OF THE INVENTION

The present disclosure now will be described more fully hereinafter with reference to the accompanying drawings, in which an exemplary embodiment of the disclosure is shown. This disclosure may, however, be embodied in many different forms and should not be construed as limited to the embodiments set forth herein.

Provided is an extruded rotor formed of an extruded bore of high temperature formed from a process and of a larger size than rotors known in the art. In addition, the extruded rotors have a greater ease of manufacture than known in the art for forged single-component rotors. In addition, extruded rotors, particularly large extruded rotors, may be formed more quickly and may have shorter delivery cycle than conventional forged rotors. In embodiments of the present disclosure, the system configuration provides a lower cost steam turbine rotor. The extruded rotor, according to the presently disclosed method, includes desirable high temperature creep, crack initiation resistance, and uniform grain distribution throughout the material.

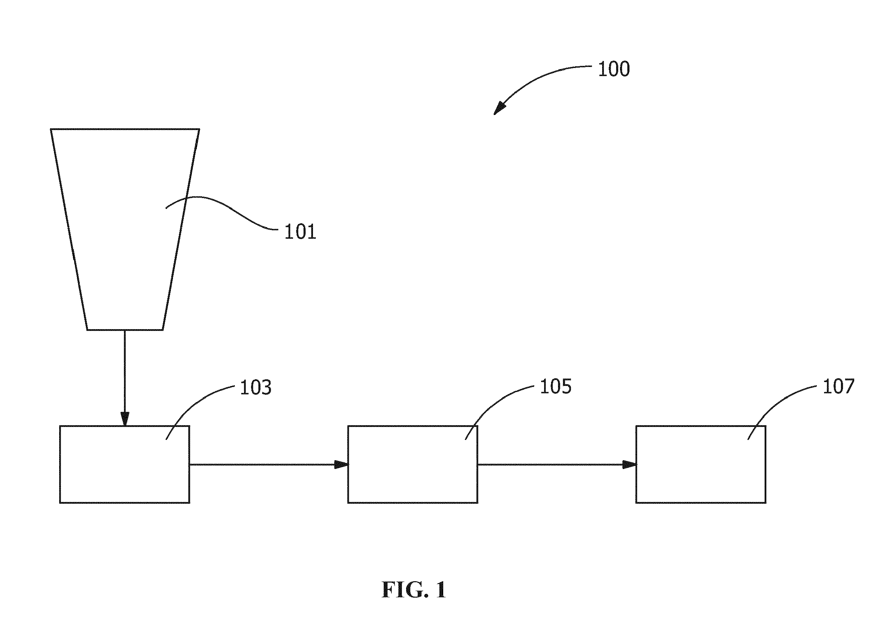

FIG. 1 illustrates a method 100 for forming a rotor according to the present disclosure. The method includes melting a high temperature alloy (step 101). In one embodiment, the melting is accomplished by vacuum induction melting (VIM). However, the melting can be accomplished by any suitable technique known for melting high temperature alloys, such as nickel-based superalloys. The method 100 further includes providing the melted high temperature alloy to a mandrel or die, where the high temperature alloy is extruded under high pressure to form an extruded bore (step 103). For example, nickel-based superalloy high temperature alloys are extruded under sufficient pressure and under conditions to cause strain sufficient to break down the grains in the metal. The extruded bore is heat treated (step 105) to provide a refined grain structure and to provide the material with the desired properties. For example, the extruded bore may be solution annealed to form a gamma prime strengthened Ni-based superalloy. For example, solution anneal heat treatments may be provided on the extruded bore at temperatures from about 1600 °F to about 2100 °F followed by aging at temperatures from about 1200 °F to about 1600 °F. The heat treated extruded bore is formed into a rotor (step 107). The post-processing may include machining, forming, welding, joining or other material manipulation to form the extruded bore into a rotor. For example, the extruded rotor may be machined to receive turbine blades. In other embodiments, turbine blades may be formed into or welded to the extruded rotor. The extruded bore provides a cavity within the rotor that permits the passage of fluid. For example, steam or air could be provided to the bore formed in the rotor to provide cooling to reduce the effective mid-wall average temperature of the rotor.

The high temperature alloy is a nickel-based superalloy. In an embodiment, the high temperature alloy may be a nickel-based superalloy including an amount of chromium (Cr), iron (Fe), molybdenum (Mo), titanium (Ti), niobium (Nb) and nickel (Ni) as remainder. Suitable nickel-iron-base superalloys include commercially available INCONEL^{®} 617, INCONEL^{®} 625, HAYNES^{®} 282 and NIMONIC^{®} 263. "INCONEL" and "NIMONIC" are federally registered trademarks of alloys produced by Huntington Alloys Corporation, Huntington, West Virginia. "HAYNES" is a federally registered trademark of alloys produced by Haynes International, Inc., Kokomo, Indiana.

In one embodiment, the high temperature alloy may be a nickel-based superalloy including Cr in an amount between about 20.0 weight percent (wt.%) to about 24.0 wt.%, Fe in an amount of about 3.0 wt.%, Mo in an amount between about 8.0 wt.% and about 10.0 wt.%, Co in an amount of between about 10.0 wt.% and about 15.0 wt.%, Mn in an amount of about 0.5 wt.%, Cu in an amount of about 0.5 wt.%, Al in an amount between about 0.8 wt.% and about 1.5 wt.%, Ti in an amount of about 0.6 wt.%, Si in an amount of about 0.5 wt.%, a maximum of 0.15 wt.% C, a maximum of 0.015 wt.% S, a maximum of 0.015 wt.% P, a maximum of 0.006 wt.% B, the balance of the nickel-based superalloy may be Ni and incidental impurities.

In another embodiment, the high temperature alloy may be a nickel-based superalloy including Cr in an amount between about 20.0 wt.% to about 23.0 wt.%, Fe in an amount of about 5.0 wt.%, Mo in an amount between about 8.0 wt.% and about 10.0 wt.%, Nb in an amount of between about 3.15 wt.% and about 4.15 wt.%, Co in an amount of about 1.0 wt.%, Mn in an amount of about 0.5 wt.%, Al in an amount of about 0.4 wt.%, Ti in an amount of about 0.4 wt.%, Si in an amount of about 0.5 wt.%, a maximum of 0.1 wt.% C, a maximum of 0.015 wt.% S, a maximum of 0.015 wt.% P, the balance of the nickel-based superalloy may be Ni and incidental impurities.

In another embodiment, the high temperature alloy may be a nickel-based superalloy including a nominal composition of 20.0 wt.% Cr, 10.0 wt.% Co, 8.5 wt.% Mo, 2.1 wt.% Ti, 1.5 wt.% Al, a maximum of 1.5 wt.% Fe, a maximum of 0.3 wt.% Mn, a maximum of 0.15 wt.% Si, 0.06 wt. % C, 0.005 wt.% B, the balance of the nickel-based superalloy may be Ni and incidental impurities.

In another embodiment, the high temperature alloy may be a nickel-based superalloy including Cr in an amount between about 19.0 wt.% to about 21.0 wt.%, Co in an amount between about 19.0 wt.% to about 21.0 wt.%, Mo in an amount between about 5.6 wt.% and about 6.1 wt.%, Ti in an amount of between about 1.9 wt.% and about 2.4 wt.%, Ti+Al in an amount of between about 2.4 wt.% and about 1.9 wt.%, C in an amount of between about 0.04 wt.% and about 0.08 wt.%, a maximum of 0.1 wt.% Si, a maximum of 0.06 wt.% Mn, a maximum of 0.007 wt.% S, a maximum of 0.0005 wt.% Ag, a maximum of 0.6 wt.% Al, a maximum of 0.005 wt.% B, a maximum of 0.0001 wt.% Bi, a maximum of 0.20 wt.% Cu, a maximum of 0.7 wt.% Fe, the balance of the nickel-based superalloy may be Ni and incidental impurities.

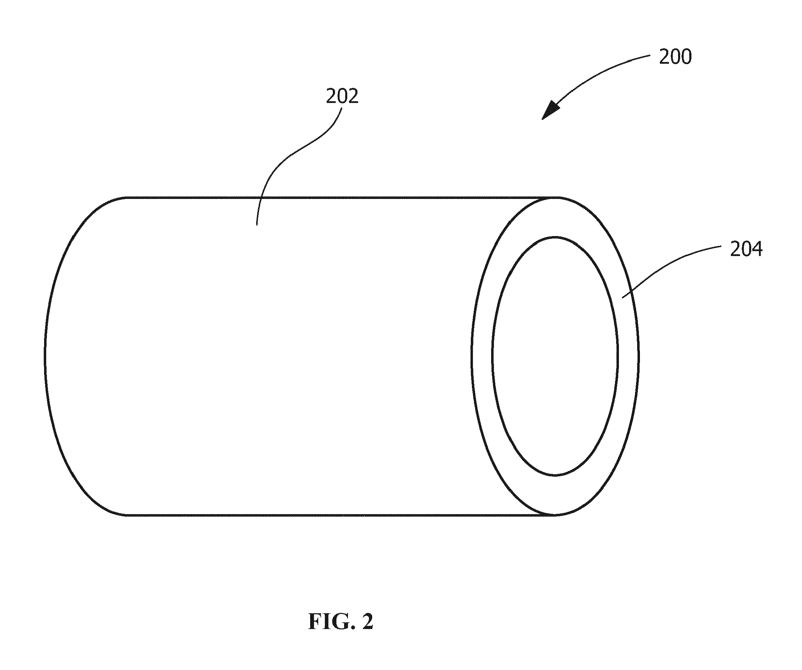

FIG. 2 shows an extruded rotor bore 200 formed according to the method of the present disclosure. The extruded rotor bore 200 has a cylindrical geometry having an outer surface 202 and a rotor wall 204. The extruded rotor bore 200 is capable of being formed into large diameters. While not so limited, the extruded rotor bore 200 has a diameter greater than about 30 inches, or greater than about 60 inches or greater than about 72 inches. The rotor wall 204 has a thickness greater than about 5 inches, or greater than about 7 inches, or from about 7 inches to 8 inches.

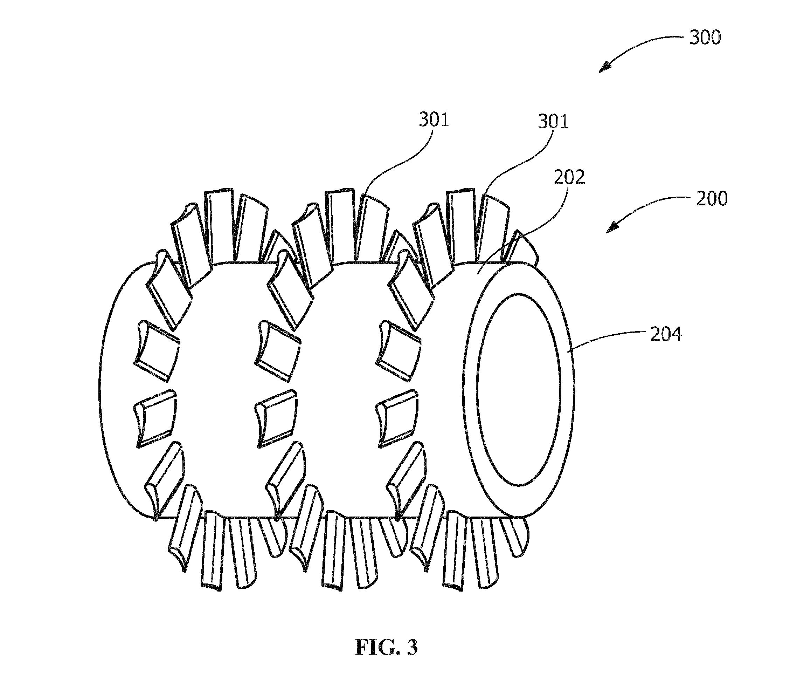

FIG. 3 shows a rotor 300 formed according to the method of the present disclosure. The rotor 300 includes a plurality of turbine blades 301 affixed to the outer surface 202. The rotor 300 includes an extruded rotor bore 200 having an extruded rotor bore 200 that has been modified to receive the turbine blades 301. In one embodiment, the rotor bore 200 is machined with grooves or other features having a geometry suitable to receive the dovetail portion of a turbine blade 301. In another embodiment, the turbine blades 301 are welded to the outer surface 202. In other embodiments, the rotor bore 200 is modified to alter the diameter along the length of the rotor bore 200, as desired for steam turbine operation. The configuration of turbine blades is not limited to the arrangement shown and may include any other suitable arrangement. In other embodiments, the rotor 300 may include fewer or no turbine blades 301, such as rotor shaft structures for connecting pressure sections, as desired for the operation of the steam turbine.

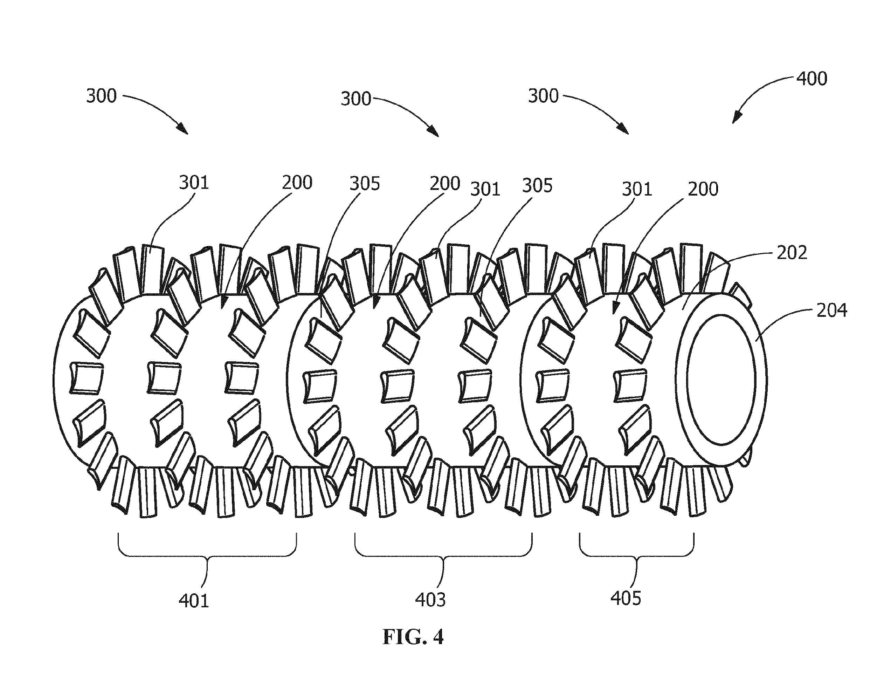

FIG. 4 shows an extended rotor 400 including a plurality of rotors 300 joined to one another. More specifically, the extended rotor 400 includes a first rotor segment 401, a second rotor segment 403 and a third rotor segment, each made up of rotors 300 formed of rotor bores 200 having an outer surface 202 and rotor wall 204 and having turbine blades 301. The rotor segments 401, 403, and 405 may be joined together by any suitable technique known for joining high temperature alloy components. For example, the rotor segments 401, 403, and 405 can be joined by a bolted joint, a weld, or other suitable joining technique. The rotor segments 401, 403, and 405 can be formed of the same material or may be different material. For example, the first rotor segment 401 may include an extruded Ni-based superalloy rotor bore 200, the second rotor segment 403 may include a Ni-based superalloy rotor bore 200 that is different than the first rotor segment, and the third rotor segment 405 may include a lower temperature material, such as a heat resisting steel formed by extrusion or forging.

The rotor 300 and the extended rotor 400, according to the present disclosure, are mounted into a steam turbine (not shown). The rotor 300 and extended rotor 400 can be included in the high pressure section, the intermediate section or other section of the steam turbine. The steam turbine operates with steam at super-critical or subcritical operating conditions. The rotor 300 and extended rotor 400 are at least partially exposed to the steam conditions, including the temperature and pressure, of the steam turbine. In one embodiment, the steam turbine receives steam at a pressure above about 220 bar. In another embodiment, the steam turbine receives steam at a pressure between about 220 bar and about 340 bar. In another embodiment, the steam turbine receives steam at a pressure between about 220 bar to about 240 bar. Additionally, the steam turbine receives steam at a temperature between about 590 °C and about 750 °C or greater. In another embodiment, the steam turbine receives steam at a temperature between about 550 °C and about 800 °C.

While only certain features and embodiments of the invention have been shown and described, many modifications and changes may occur to those skilled in the art (for example, variations in sizes, dimensions, structures, shapes and proportions of the various elements, values of parameters (for example, temperatures, pressures, etc.), mounting arrangements, use of materials, orientations, etc.) without materially departing from the novel teachings and advantages of the subject matter recited in the claims. The order or sequence of any process or method steps may be varied or resequenced according to alternative embodiments. It is, therefore, to be understood that the appended claims are intended to cover all such modifications and changes as fall within the true spirit of the invention. Furthermore, in an effort to provide a concise description of the exemplary embodiments, all features of an actual implementation may not have been described (i.e., those unrelated to the presently contemplated best mode of carrying out the invention, or those unrelated to enabling the claimed invention). It should be appreciated that in the development of any such actual implementation, as in any engineering or design project, numerous implementation specific decisions may be made. Such a development effort might be complex and time consuming, but would nevertheless be a routine undertaking of design, fabrication, and manufacture for those of ordinary skill having the benefit of this disclosure, without undue experimentation.

## Claims

1. An extruded rotor (300), comprising:
a rotor bore (200) formed of an extruded high temperature alloy.

2. The extruded rotor of claim 1, wherein the high temperature alloy is a nickel-based superalloy.

3. The extruded rotor of claim 1 or 2, wherein the rotor bore (200) includes a machined outer surface. (202)

4. The extruded rotor of claim 3, wherein the machined outer surface (202) is configured to receive turbine blades (301).

5. The extruded rotor of any of claims 1 to 4, further including turbine blades (301).

6. The extruded rotor of claim 5, wherein the turbine blades (301) are joined to the rotor bore (200).

7. A steam turbine, comprising:
the extruded rotor (300), of any of claims 1 to 6.

8. The steam turbine of claim 7, further comprising one or more rotor segment (401,408,405) attached to the extruded rotor (300,400).

9. A method (100) of making an extruded rotor (300,400) comprising:
providing a high temperature alloy;
melting (101) the high temperature alloy;
extruding (103) the high temperature alloy to form a rotor bore (200); and
forming (105,107) the rotor bore (200) into a rotor (300).

10. The method of claim 9, wherein the high temperature alloy is a nickel-based superalloy.

11. The method of claim 9 or 10, further comprising joining the rotor bore (200) to one or more additional rotor segments (401,403,405).

12. The method of any of claims 9 to 11, wherein the forming includes machining the rotor bore (200) to form a machined outer surface (202).

13. The method of claim 12, wherein the machined outer surface (202) is configured to receive turbine blades (301).

14. The method of any of claims 9 to 13, wherein the forming includes joining a turbine blade (301) to the rotor bore (200).

15. The method of any of claims 9 to 14, wherein the forming includes machining the rotor bore (200) to provide a rotor wall (204) that varies in thickness along the length of the rotor bore (200).
